(19) **Europäisches Patentamt** / **European Patent Office** / **Office européen des brevets**

(11) **EP 0 960 382 B1**

(12) **FASCICULE DE BREVET EUROPEEN**

(45) Date de publication et mention de la délivrance du brevet:
**17.09.2008  Bulletin 2008/38**

(21) Numéro de dépôt: **98908183.1**

(22) Date de dépôt: **13.02.1998**

(51) Int Cl.:
***G06K 9/64*** (2006.01)

(86) Numéro de dépôt international:
**PCT/FR1998/000277**

(87) Numéro de publication internationale:
**WO 1998/036373 (20.08.1998 Gazette 1998/33)**

(54) **PROCEDE POUR RECONNAITRE DANS UN CATALOGUE PREETABLI DES ETOILES DETECTEES PAR UN SENSEUR STELLAIRE**

VERFAHREN ZUR ERKENNUNG VON DURCH EINEN STERNSENSOR AUFGEFUNDENEN STERNEN IN EINEM VORERZEUGTEN VERZEICHNIS

METHOD FOR IDENTIFYING IN A PRE-ESTABLISHED CATALOGUE STARS DETECTED BY A STAR SENSOR

(84) Etats contractants désignés:
**DE FR GB IT**

(30) Priorité: **13.02.1997  FR 9701668**

(43) Date de publication de la demande:
**01.12.1999  Bulletin 1999/48**

(73) Titulaire: **CENTRE NATIONAL D'ETUDES SPATIALES**
**75001 Paris (FR)**

(72) Inventeur: **POTTECK, Serge**
**F-31000 Toulouse (FR)**

(74) Mandataire: **Texier, Christian et al**
**Cabinet Régimbeau**
**20, rue de Chazelles**
**75847 Paris cedex 17 (FR)**

(56) Documents cités:
- **BEZOOIJEN VAN R W R: "AUTONOMOUS STAR TRACKER DEVELOPMENT" AUTOMATIC CONTROL IN AEROSPACE IFAC SYMPOSIUM, 17-21 JULY 1989, TSUKUBA, JP, 7 septembre 1992, pages 513-518, XP000645665**
- **GROTH E J: "A pattern-matching algorithm for two-dimensional coordinate lists" ASTRONOMICAL JOURNAL, MAY 1986, USA, vol. 91, no. 5, ISSN 0004-6256, pages 1244-1248, XP002044901**
- **SCHOLL M S: "SIX-FEATURE STAR-PATTERN IDENTIFICATION ALGORITHM" APPLIED OPTICS, vol. 33, no. 20, 10 juillet 1994, pages 4459-4464, XP000455186**

EP 0 960 382 B1

**Description**

L'invention concerne un procédé pour reconnaître dans un catalogue préétabli d'étoiles de la voûte stellaire tout ou partie des étoiles détectées par un senseur stellaire, pour un système de traitement utilisateur de la reconnaissance stellaire.

En cas de succès, il est par exemple possible d'estimer l'attitude du repère du senseur stellaire ou d'affiner une estimation utilisant également d'autres moyens, ce qui permet ensuite de remonter à l'attitude du véhicule, par exemple un aéronef ou un sous-marin, sur lequel est implanté le senseur stellaire.

On connaît des procédés de reconnaissance d'étoiles dans lesquels :

- on sélectionne certaines étoiles parmi les étoiles captées, les étoiles ainsi sélectionnées étant dites ci-après «étoiles détectées» ;
- on accouple deux à deux les étoiles détectées en doublets dits «doublets détectés» ;
- on repère des «doublets possibles», c'est-à-dire des doublets d'étoiles du catalogue qui sont au voisinage des doublets détectés dans un espace de caractérisation commun ;
- on créé des couples constitués chacun d'un étoile d'un doublet possible et d'une étoile détectée, et
- on fournit au système de traitement au moins une liste de ces couples,

Un exemple d'un tel procédé est fourni par la publication «Autonomous Star Tracker Development» de R.W.H Van Bezooijen publiée dans le compte-rendu de Automatic Control In Aerospace IFAC Symposium» de Tsukuba le 7 septembre 1992.

L'invention vise à améliorer le taux de reconnaissance des procédés connus et à minimiser le temps de calcul.

On y parvient selon la présente invention au moyen d'un procédé tel que défini dans la revendication 1.

L'invention permet ainsi de créer un ensemble de sous-catalogues tel que les étoiles réellement présentes dans le champ de vue aient une chance infime de se trouver dispersées dans plusieurs de ces sous-catalogues dont les étoiles ont une chance particulièrement grande d'avoir été présentes dans le champ de vue, celles qui sont trop peu liées ayant été évacuées par épuration.

Le procédé de l'invention conduit à ce que les appariements soient réalisés sur la base de sous-catalogues épurés de taille très réduite, ce qui la plupart du temps compense largement l'augmentation du temps de calcul induit par la multiplicité des sous-catalogues.

L'invention a aussi pour objet un procédé d'appariement grâce auquel, à performances égales du senseur stellaire, le taux de reconnaissance se trouve nettement amélioré par rapport aux procédés connus.

On décrira ci-après des modes de mise en oeuvre du procédé de l'invention, et la description et les figures feront apparaître d'autres caractéristiques avantageuses de ces modes de mise en oeuvre.

Sur les figures :

- la figure 1 est un schéma représentant des doublets détectés et possibles dans un espace de caractérisation ;
- la figure 2 est un schéma représentant des doublets possibles dans une figuration de la voûte céleste ;
- la figure 3 est un schéma d'une liste de doublets possibles formée à partir d'une liste de doublets détectés ;
- la figure 4 est un schéma de la voûte céleste dans lequel on a représenté le champ de vue du capteur et, pour différentes classes, les chemins qui relient les étoiles de chaque classe ;
- la figure 5 est un schéma représentatif d'un procédé de mise en classes ;

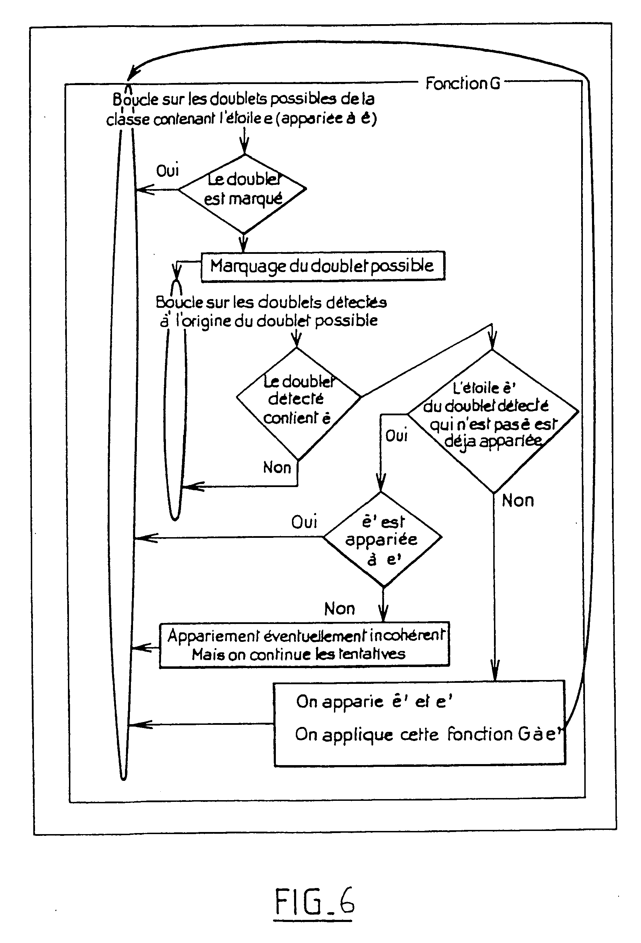

- la figure 6 est un schéma représentatif d'un procédé d'appariement, et
- la figure 7 est un schéma de mise en oeuvre d'un procédé pour éliminer des couples d'étoiles appariées qui sont aberrants.

Une étape préliminaire au procédé de l'invention consiste à reconstituer, à partir de la mesure brute du senseur, un ensemble d'étoiles supposées avoir été présentes au moment de la mesure.

La sortie de cette étape est une liste «d'étoiles captées». Ces étoiles sont souvent décrites par leur magnitude et leur position dans un repère de référence (par exemple celui du capteur).

L'étape suivante ou première étape du procédé de l'invention consiste à ne garder pour la suite des traitements qu'une partie des «étoiles captées». Par exemple, on propose que soient gardées les K étoiles de plus faible magnitude (c'est à dire les plus brillantes), K étant un nombre entier choisi à l'avance.

On appelle «étoiles détectées» les étoiles issues de cette sélection.

La deuxième étape du procédé consiste à accoupler deux à deux les étoiles détectées en «doublets détectés».

La troisième étape du procédé, éventuellement réalisée au fur et à mesure du parcours de tout ou partie de l'ensemble des doublets détectés, vise à faire la liste de tout ou partie des «doublets possibles», c'est à dire des doublets du catalogue d'étoiles qui ont une bonne chance d'avoir été présentes dans le champ de vue lors de la mesure.

Pour les besoins de cette étape, à partir d'un catalogue énumérant les étoiles et fournissant leurs caractéristiques on peut créer, s'il n'existe déjà, un «catalogue» de doublets ne contenant que les doublets ayant une distance angulaire suffisamment faible pour que leurs deux étoiles puissent avoir été présentes simultanément dans le champ de vue du senseur. On peut classer les doublets par ordre de distance angulaire croissante ou décroissante, ce qui permet de les trouver plus facilement ensuite. Pour sélectionner les doublets possibles on travaille dans un espace de caractérisation des doublets compatible à la fois avec les renseignements fournis par le catalogue et les mesures fournies par le senseur.

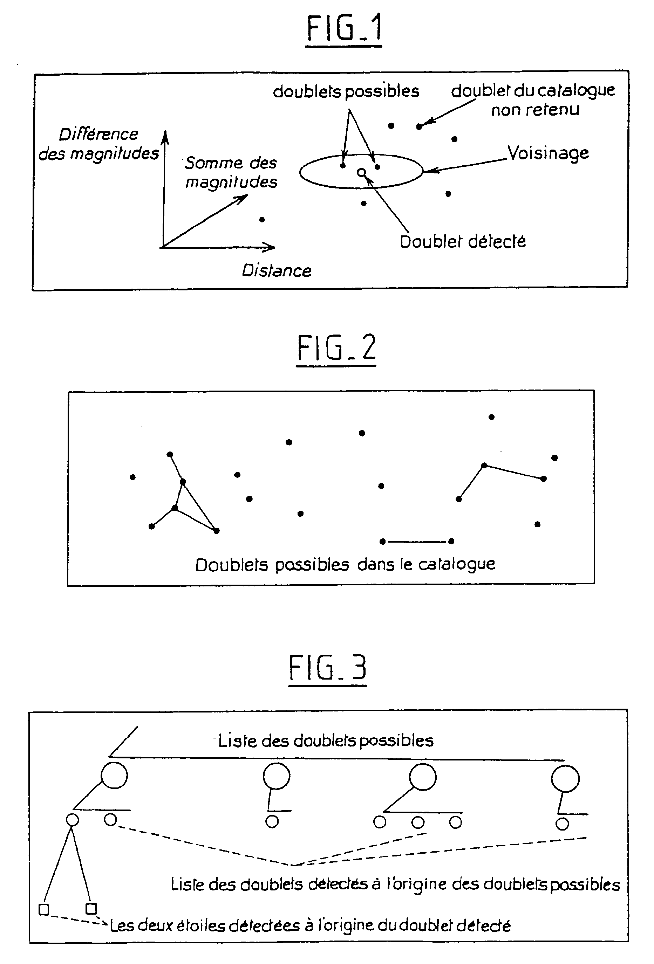

Par exemple, on prend comme espace des doublets un espace tri-dimensionnel dont les trois axes correspondent respectivement à la distance angulaire entre les deux étoiles constituant le doublet, à la valeur absolue de la différence des magnitudes et à la somme des magnitudes (fig. 1) et l'on retient un doublet du catalogue comme «possible» quand, dans cet espace, il est situé dans un «voisinage» du doublet détecté.

L'intérêt de travailler sur la différence des magnitudes est le suivant : les erreurs sur la magnitude sous formes de biais s'éliminent automatiquement.

Le voisinage est par exemple défini par un ellipsoïde ou un parallélépipède, et il peut être centré sur le doublet détecté.

Au cours de cette étape, on peut ne collecter que les doublets qui se trouvent dans certaines zones du ciel connues comme celles que le senseur a de grandes chances de viser. Cela peut être réalisé par la création dynamique, avant cette étape, d'un sous-catalogue d'étoiles et/ou de doublets remplaçant les catalogues complets. Cela peut également être réalisé par un test au moment du passage sur un doublet, lors du parcours de tous les doublets correspondant aux étoiles du catalogue d'étoiles ou de doublets.

La figure 2 est un schéma de la voûte céleste où l'on a représenté un exemple de doublets possibles du catalogue.

L'ensemble des doublets possibles est appelé «D». L'ensemble des étoiles possibles correspondantes lui est implicitement associé.

Si nécessaire pour la suite, on associe à chacun de ces doublets possibles la liste LDD des doublets «détectés» qui sont à l'origine de l'existence de ce doublet «possible», en veillant à ce que l'on puisse remonter aux étoiles détectées à partir des doublets détectés (fig. 3).

Si au fil des traitements le nombre de doublets possibles menace de dépasser la capacité des moyens mettant en oeuvre le procédé, on peut par exemple arrêter la constitution de la liste ou détruire des doublets possibles déjà identifiés. Les choisir au hasard dans la liste peut être avantageux.

Une autre étape consiste selon l'invention à regrouper en classes les étoiles de D.

On définit un chemin h comme une suite $\delta_0,...,\delta_{N-1}$ d'éléments de D, telle que toute paire de doublets consécutifs dans cette suite ait au moins une étoile commune.

Dans l'ensemble E des étoiles, on définit la relation d'équivalence suivante :

$$\varepsilon_1 \equiv \varepsilon_2 \text{ (l'étoile } \varepsilon_1 \text{ est en relation avec l'étoile } \varepsilon_2) \Leftrightarrow$$

$$\varepsilon_1 = \varepsilon_2, \text{ ou il existe un chemin } h_{1,2} \text{ constitué d'éléments de D qui relie } \varepsilon_1 \text{ à } \varepsilon_2$$

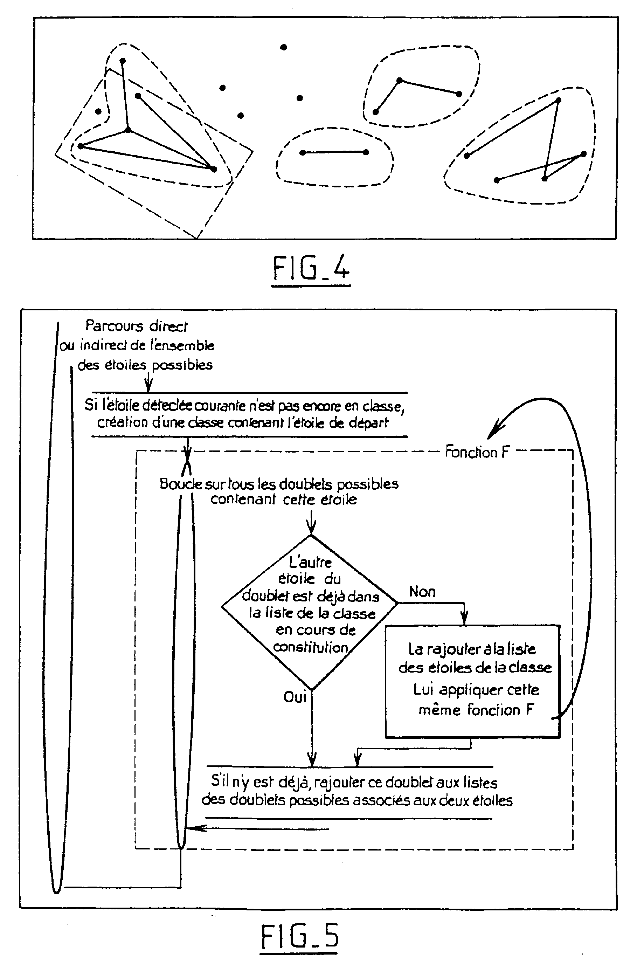

Cette relation d'équivalence définit dans le catalogue d'étoiles des classes d'équivalences. Une classe est dans la suite l'ensemble d'étoiles correspondant à une classe d'équivalence et/ou l'ensemble des doublets possibles correspondants. Sur la figure 4 qui représente des étoiles du catalogue, les classes sont repérées par une boucle courbe.

Selon le schéma de la figure 5 qui présente un procédé de mise en classes, en partant d'une étoile appartenant à l'un des doublets possibles et qui constitue la première étoile d'une nouvelle classe, on rattache de proche en proche à cette classe les étoiles qui sont reliées par au moins un chemin à la première étoile.

Par exemple, on applique la «fonction F» à cette première étoile : on fait une boucle sur les doublets possibles contentant cette première étoile devenue «étoile courante». Pour chaque doublet, si l'étoile du doublet qui n'est pas l'étoile courante est déjà présente dans la classe, on passe à l'itération suivante de la boucle. Sinon on rajoute l'étoile qui n'est pas l'étoile courante à la classe, et l'on applique la fonction F à cette nouvelle étoile qui devient l'étoile courante. On continue ainsi, récursivement, en appliquant la fonction F à toute étoile qui n'est pas encore dans la classe avant de poursuivre dans l'application de la fonction F à l'étoile courante.

Le processus récursif doit être arrêté. Pour cela, on peut « marquer» les étoiles déjà traitées pour ne plus les traiter à nouveau. On peut aussi marquer les doublets pour ne plus les traiter une seconde fois, au moment où l'on y accédera par l'autre extrémité.

Quand ce processus récursif est arrêté, c'est à dire quand la classe courante est entièrement constituée, on crée la classe suivante autour d'une étoile qui n'a pas été rattachée précédemment à une classe, et l'on construit cette classe comme indiqué à l'instant. La mise en classes s'arrête quand toutes les étoiles de départ (ou tous les doublets possibles) ont été traitées.

Quelle que soit l'implantation choisie, que l'on construise une classe en tant que :

- liste d'objets pointant vers les étoiles du catalogue ou reproduisant ces étoiles.
- liste d'objets pointant vers la liste complète de doublets possibles ou reproduisant ces doublets (une classe étant alors représentée par la liste des doublets contenant ses étoiles),
- ou que l'on se contente de lier entre elles les étoiles appartenant aux différentes classes dans le catalogue d'étoiles (respectivement les doublets dans le catalogue de doublets),

il peut être utile de conserver à la fois la liste des doublets possibles et des étoiles possibles. On conserve ainsi toute l'information nécessaire à d'éventuelles opérations ultérieures d'épuration, de nouvelles mises en classe et/ou d'appariement. Ces opérations peuvent de plus être simplifiés si l'on a matérialisé les liens entre les étoiles possibles et les doublets possibles auxquelles elles appartiennent.

Des «mises en classes virtuelles» peuvent aussi être réalisées. S'opposant aux «mises en classes matérialisées» précédentes (consistant par exemple à créer des listes ou mettre en place des pointeurs dans des structures informatiques), les mises en classes virtuelles consistent à attribuer à chaque étoile certaines caractéristiques de la classe d'équivalence à laquelle elle appartient sur la base des doublets possibles existants. Ces caractéristiques peuvent être le nombre d'étoiles et/ou le nombre de doublets possibles du groupe.

Le procédé récursif ci-dessus permet de réaliser une mise en classes virtuelle sans création de liste à condition d'être appliqué deux fois, la première fois pour évaluer les caractéristiques de la classe d'équivalence et la seconde pour attribuer ces caractéristiques à chaque étoile du groupe.

Selon une option avantageuse du procédé de l'invention, on soumet tout ou partie des étoiles possibles à une épuration. Celle-ci consiste à supprimer définitivement dans la ou les listes dans lesquelles elles apparaissent, sur la base d'un critère, certaines étoiles possibles ainsi que tous les doublets possibles les contenant.

Ce critère consiste par exemple à rejeter une étoile se trouvant trop proche d'une autre étoile au sens d'une norme définie dans un espace de caractérisation des doublets, ou à rejeter une étoile si le nombre de liaison par doublets possibles entre cette étoile et les autres étoiles est inférieur à un seuil. À condition qu'une mise en classes ait été réalisée préalablement, ce seuil peut dépendre des caractéristiques de la dernière classe à laquelle a appartenu l'étoile considérée (une caractéristique importante étant le nombre d'étoiles de cette classe).

Appliquer ce critère à toutes les étoiles d'un groupe d'étoiles à traiter - selon les cas et selon les moments à toutes les étoiles possibles ou à une partie d'entre elles correspondant par exemple à une classe - constitue une passe d'épuration.

Des passes consécutives peuvent être réalisées sur la base du même critère, en nombre prédéfini ou jusqu'à ce que plus aucune étoile ne soit supprimée. Quand une passe a conduit à ne supprimer aucune étoile, il est inutile de réaliser les passes suivantes du même épisode.

Une telle succession de passes est appelée un «épisode» d'épuration.

L'ensemble de l'épuration est constituée de plusieurs successions d'épisodes, respectivement appliqués à divers groupes d'étoiles constitués de l'ensemble complet des étoiles possibles, d'une classe, ou du résidu des étoiles ayant précédemment formé une classe. Chaque épisode peut être défini par un critère d'épuration différent. Le nombre d'épisodes peut toutefois être éventuellement réduit à zéro, l'épuration est alors inexistante.

Toute passe d'épuration qui serait appliquée à une classe est susceptible non seulement de réduire la taille de cette classe par suppression d'une ou plusieurs étoiles, mais aussi de transformer la structure d'étoiles et de doublets possibles qui constituait la classe en une structure n'ayant plus les propriétés d'une classe d'équivalence. Dans ce cas, si les caractéristiques des classes interviennent dans le critère d'une passe ultérieure, on pourra utiliser les caractéristiques de la dernière classe à laquelle a appartenu l'étoile considérée. Si le nombre d'étoiles de la dernière classe intervient dans le critère, on peut toutefois utiliser dans le critère non pas le nombre d'étoiles de la classe origine, mais ce nombre diminué d'une unité à chaque suppression d'étoile.

Les opérations de mise en classes et la réalisation des épisodes peuvent être avantageusement articulées, de sorte à affiner le critère d'épuration grâce aux caractéristiques du groupe d'étoiles (une classe d'équivalence qui pour le procédé n'est pas encore une classe) auxquelles l'étoile considérée est liée par des doublets possibles.

Une mise en classes peut être réalisée après certains épisodes.

La succession des épisodes et des mises en classes est construite à partir d'un ou plusieurs «tableaux d'épisodes» tels que celui présentée sur le tableau I.

Dans ce tableau les deux colonnes de gauche présentent les mises en classes et les épisodes qui sont successivement réalisés (de haut en bas et de gauche à droite). Chaque épisode est caractérisé par son nombre de passes et par son critère (dans cet exemple le critère est défini par le nombre minimum de doublets possibles contenant une étoile que l'on conserve, en fonction du nombre d'étoiles du groupe).

<u>TABLEAU I</u>

| Mise en classes | Episodes | Nb. passes | Nombre d'étoiles dans le groupe ou la classe | | | | | | |
|---|---|---|---|---|---|---|---|---|---|
| | | | 2 | 3 | 4 | 5 | 6 | 7 | 8 et plus |
| x | | | | | | | | | |
| | Episode 1 | 25 | Pas de dépendance à la taille du groupe on supprime les étoiles incluses dans un seul doublet | | | | | | |
| . | | | | | | | | | |
| | Episode 2 | 1 | 1 | 2 | 3 | 2 | 2 | 3 | 4 |
| X | | | | | | | | | |
| | Episode 3 | 2 | 1 | 2 | 3 | 2 | 3 | 4 | 5 |
| ·/ | | | | | | | | | |

Dans le premier épisode, ce sont toutes les étoiles liées à une seule autre étoiles qui sont supprimées. Il est donc inutile de réaliser une mise en classes préalablement (signe x).

Dans le cas où une mise en classes est prévue après un épisode (signe dans le tableau), il est inutile de la réaliser si le groupe d'étoiles produit par ledit épisode est resté inchangé à travers les derniers épisodes appliqués aux étoiles du groupe depuis leur dernière mise en classes.

Dans le cas où la mise en classes n'est pas souhaitée après un épisode (signe x dans le tableau), ou encore dans le cas où la mise en classes est réalisée mais qu'elle n'a produit qu'une seule classe, alors l'épisode suivant du tableau d'épisodes est appliqué à ce groupe d'étoiles.

Dans le cas où une mise en classes est réalisée et produit plusieurs classes, il y a deux options. Soit l'on applique à chacune des classes produites l'épisode suivant dans le tableau d'épisodes courant. Ladite mise en classes est alors dite «non initialisante». Soit la mise en classes est «initialisante» et pour chacune des classes produites on reprend la succession d'épisode au premier épisode d'un nouveau tableau d'épisodes (signe ·/ dans le tableau). Ce nouveau tableau d'épisode peut être identique au précédent. Il peut aussi dépendre par exemple du nombre d'épisodes ou de mises en classes déjà subis par les étoiles des classes.

Le dernier épisode de tout tableau d'épisodes est nécessairement suivi d'une mise en classes des étoiles produites par le dernier épisode (sauf, éventuellement, si ce groupe d'étoiles est resté inchangé à travers les derniers épisodes appliqués aux étoiles du groupe depuis leur dernière mise en classes). Si cette dernière mise en classes est initialisante et si plusieurs classes sont produites alors on reprend l'épuration au premier épisode d'un nouveau tableau d'épisodes. Si une seule classe est produite ou si la mise en classes est non initialisante alors le processus d'épuration s'arrête pour les étoiles correspondantes et les classes produites (éventuellement réduites à une seule) sont définitives.

Dans ce processus d'épuration, avant la première mise en classes ce sont l'ensemble des étoiles possibles qui sont soumises aux épisodes. Après la première mise en classes ou toute autre mise en classes ultérieures, en commençant par le prochain épisode dont le procédé de choix vient d'être précisé, diverses manières de traiter les classes produites peuvent être utilisées et éventuellement combinées :

- aux étoiles de toutes les classes issues de l'épisode précédent, on applique les épisodes consécutifs du tableau d'épisodes non entrecoupés d'une mise en classes mais se terminant par une mise en classes (par exemple la série des épisodes 1 et 2 du tableau I). On base à chaque fois le critère sur les caractéristiques de la classe à laquelle appartient l'étoile considérée, ces caractéristiques étant éventuellement partiellement remises à jour lors de la suppression d'étoiles, comme indiqué plus haut. Pratiquement, le traitement peut être effectué classe par classe, ou sur l'ensemble complet des étoiles pourvu qu'une mise en classes virtuelle ait été effectuée précédemment. On rassemble ensuite toutes les étoiles possibles épargnées, auxquelles on applique la mise en classes suivante.
- on travaille comme dans le cas précédent, mais les groupes issus de chaque classe initiale sont séparément mis en classes, et l'on collecte au passage ou l'on rassemble à la fin les classes produites.
- on traite les classes récursivement, jusqu'à l'issue du processus d'épuration et de mise en classes.

On applique la fonction R : Après chaque mise en classes on traite successivement et indépendamment les classes issues de la mise en classes précédente. Si cette mise en classes était initialisante et si elle produisit plusieurs classes, alors on applique auxdites classes le premier épisode d'un nouveau tableau d'épisodes. S'il s'agissait de la première mise en classes on applique à chaque classe le premier épisode du premier tableau d'épisodes. Dans les autres cas on applique l'épisode suivant dans le tableau d'épisodes courant.

Dans le cas de chaque classe on fait suivre à l'épisode qui vient d'être indiqué les épisodes supplémentaires précédant la prochaine mise en classes (il n'y en a éventuellement pas), puis on applique ladite mise en classes aux étoiles produites.

On applique la fonction R à chacune des classes produites successivement, avant même de poursuivre le traitement des classes produites par la précédente mise en classe.

Dans chacune des branches ce traitement récursif conduit soit à la suppression de toutes les étoiles, soit à la production des classes définitives qu'il suffit de collecter, au fur et à mesure si le processus est séquentiel (il peut aussi être parallélisé).

Dans certaines implémentations ces trois procédés nécessitent qu'au fil de l'épuration d'un groupe d'étoiles, on renseigne des attributs de ce groupe décrivant son point d'épuration courant (référence du tableau d'épisode, référence de l'épisode courant à l'intérieur du tableau et référence de la passe courante à l'intérieur de l'épisode courant). Les deux premiers de ces attributs doivent éventuellement être conservés au moment de la mise en classes de sorte à pouvoir déterminer quel est l'épisode suivant qui sera appliqué aux classes résultantes.

Dans tous les cas précédents concernant l'épuration, si le critère épuration fait intervenir les caractéristiques du groupe d'étoiles contenant l'étoile traitée (par exemple le nombre d'étoile et/ou le nombre de liens entre cette étoile et les autres étoiles de la classe), il y a deux possibilités. Soit un premier parcours du groupe d'étoiles soumises à la passe première passe est réalisé pour marquer les étoiles possibles et les doublets possibles devant être éliminés. Le critère est alors à chaque fois calculé sur la base des caractéristiques initiales du groupe, les éliminations étant effectuées dans les différentes listes dans un second temps. Soit les éliminations sont réalisées au fur et à mesure, avec l'inconvénient que les caractéristiques du groupe peuvent changer au fur et à mesure des calculs successifs des critères d'épuration (suite aux suppressions d'éléments).

Dans tous les cas les classes dont le nombre d'étoiles est trop faible peuvent être éliminées au fur et à mesure de toutes les opérations de mises en classes.

On se retrouve en général à la fin du processus de mise en classes-épuration avec un nombre de classes faible, même quand le nombre total de classes produites aux étapes intermédiaires fut élevé.

Dans le cas où le nombre et le volume des classes dépassent les capacités des moyens mettant en oeuvre le procédé, on peut détruire des classes déjà construites choisies parmi celles contenant le moins d'étoiles.

En sortie des opérations de mise en classes-épuration, les différentes classes constituent autant de sous-catalogues. Ceux-ci offrent les propriétés suivantes : d'une part, il y a peu de chances que les étoiles réellement présentes dans le champ de vue du senseur lors de la mesure soient réparties entre plusieurs classes. En effet, une bonne part des doublets détectés reliant les étoiles détectées ont conduit à une correcte sélection des doublets possibles entre les bonnes étoiles possibles (non connues encore). Les nombreuses connexions entre ces étoiles auront empêché qu'elles ne soient séparées dans plusieurs classes lors des opérations de mise en classes-épuration. D'autre part, dans la classe contenant effectivement les étoiles présentes dans le champ de vue lors de la mesure, les mauvaises étoiles ont de bonnes chances d'avoir été éliminées par l'épuration.

Les classes peuvent donc être traitées indépendamment, et à chaque fois on cherche à apparier les étoiles détectées avec les étoiles possibles de la classe considérée. Tout procédé connu ou combinaison de procédé connus peuvent être utilisés pour cela. Pour chaque classe ainsi traitée on obtient une «liste de couples d'étoiles appariées».

L'étape suivante du procédé est donc l'appariement des étoiles possibles (de chaque classe successivement) avec les étoiles détectées issues de la mesure stellaire. Il est envisageable d'apparier un même étoile détectée avec plusieurs étoiles possibles, soit provisoirement soit définitivement si le système utilisateur peut en tirer parti et lever l'ambiguïté à son niveau. Dans la suite, nous considérerons toutefois implicitement que chaque étoile possible de la classe et chaque étoile détectée seront incluses dans un couple d'étoiles appariées au plus.

On propose ici une méthode d'appariement exploitant le lien entre les doublets possibles et les doublets détectés.

On fait une boucle sur les étoiles possibles que l'on cherche à apparier, selon le cas dans l'ensemble des étoiles possibles ou classe par classe.

Pour l'étoile possible correspondant à l'itération considérée (l'étoile est notée $e_p$) :

- on utilise (en la créant à ce niveau si elle ne l'a pas été plus tôt) la liste «LDD» des doublets détectés lors de la mesure par le senseur stellaire, et qui sont à l'origine des doublets possibles contenant l'étoile.

- on choisit l'étoile détectée $\hat{e}_d$ qui est la plus souvent rencontrée parmi cette liste de doublets détectés.

S'il y a indétermination, on passe au traitement de l'étoile possible suivante.

Si cette étoile détectée a déjà été appariée avec une étoile de la classe courante, on peut passer à l'étoile suivante de la classe, après avoir éventuellement marqué cette classe comme étant «incohérente».

On peut utiliser un critère d'acceptation de l'étoile détectée choisie. On rejette par exemple l'étoile détectée choisie $\hat{e}_d$ si la différence entre le nombre de rencontres de la seconde étoile détectée la plus rencontrée dans LDD et le nombre de rencontre de êd est inférieure à une valeur limite, dépendant éventuellement du nombre d'étoiles dans la classe..

Si le critère est vérifié ou s'il n'y a pas de critère, on apparie $\hat{e}_d$ à $e_p$ : on considère que l'étoile courante est l'étoile du catalogue correspondant à $\hat{e}_d$. Le couple $\{\hat{e}_d, e_p\}$ est appelé un «couple d'étoiles appariées».

On passe alors au traitement de l'étoile possible suivante.

Le procédé d'épuration qui vient d'être présenté est l'un de ces procédés pouvant être mise en oeuvre avant les opérations de mise en classes-épurations, sans perte de performances dans le cas où l'épuration est inexistante ou très peu sévère.

Quand le procédé est appliqué après la mise en classes, les couples d'étoiles appariées créés au fur et à mesure peuvent être ajoutés à la «liste des couples d'étoiles appariées» correspondant aux classes au fur et à mesure de leur création. Dans le cas contraire les listes sont constituées après la mise en classes.

Dans le cas de certains procédés d'appariement utilisés, on peut cesser les tentatives d'appariements quand on estime disposer de couples appariés en nombre suffisant. Il est alors avantageux de traiter les étoiles possibles dans l'ordre décroissant de la confiance qu'on peut leur accorder. L'ordre décroissant du nombre de doublets possibles dans lesquels les étoiles possibles traitées sont présentes est conseillé dans le cas du procédé qui vient d'être présenté.

Une valeur de confiance a priori et/ou une valeur de confiance a posteriori correspondant à chaque classe peuvent être calculées et mises à profit.

Il s'agit de calculer le degré de confiance que l'on a dans le fait que chacune des classes correspondent à ce qui se trouvait dans le champ de vue du senseur lors de la mesure, avant et après les processus d'appariement.

Les valeurs de confiance peuvent dépendre des termes suivants :

- le nombre $N_j$ d'étoiles de la classe. Ce nombre peut intervenir par l'intermédiaire du terme tangente hyperbolique du nombre d'étoiles multiplié par une constante, le tout élevé à une certaine puissance.
- le taux moyen de connexion $T_j$ de la classe, défini comme son nombre de doublets possibles de la classe divisé par $N_j(N_j-1)/2$ (le nombre de doublets maximum compte-tenu du nombre d'étoiles). Ce nombre peut intervenir par l'intermédiaire de l'une de ses puissances.

La valeur de confiance a posteriori, puisqu'elle est calculée après l'appariement, peut s'appuyer sur d'autres termes tels que le taux d'étoiles appariées (qui est le rapport du nombre d'étoiles appariées de la classe sur le nombre total d'étoiles de la classe), ou sur une valeur caractérisant les incohérences ayant eu lieu pendant l'appariement des étoiles de la classe.

Les valeurs de confiance a priori et a posteriori peuvent avoir pour terme un produit des termes présentés ci-dessus et les concernant respectivement.

On peut aussi appliquer divers traitements permettant de rejeter des classes peu fiables. Par exemple on peut rejeter définitivement les classes dont la valeur de confiance a priori est inférieure à un seuil fixé à l'avance. Après l'appariement, on peut rejeter les classes dont la valeur de confiance a posteriori est inférieure à un seuil fixé à l'avance, ou celles ayant conduit à des incohérences lors de l'appariement.

On peut envisager divers modes de sélection des résultats à transmettre par le présent procédé au système utilisateur :

- Le présent procédé traite les classes dans l'ordre décroissant de leur indice de confiance a priori et arrête les traitements quand ont été obtenues une ou plusieurs listes appariées considérées comme suffisamment fiables parce que leur indice de confiance dépasse une valeur de seuil. Le gain éventuel en temps de calcul est amélioré si les appariements sont réalisés pour une classe tout de suite après sa création définitive à l'intérieur du processus de mise en classes-épuration. Dans ce cas c'est à chaque niveau de mise en classes que l'on traite les classes dans l'ordre de leur indice de confiance.
- on peut réaliser l'appariement pour toutes les classes et retenir celles dont la valeur de confiance a posteriori est la plus grande. On peut sélectionner un nombre prédifini de listes de couples d'étoiles appariées, ce nombre étant toutefois limité au le nombre de classes produites.
- on peut transmettre au système utilisateur de la reconnaissance toutes les listes de couples d'étoiles appariées correspondant à toutes les classes.

Quand plusieurs listes de couples d'étoiles appariées sont transmises au système utilisateur, chacune des listes est avantageusement accompagnée de son critère de confiance a priori.

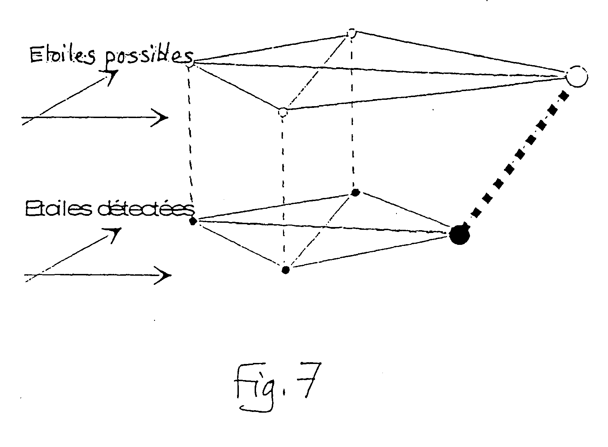

Une fois obtenue une liste de couples d'étoiles appariées par un procédé quelconque, on peut chercher à éliminer les couples d'étoiles appariées qui sont aberrants. On propose ici le procédé suivant : on considère que si un appariement est faux, les doublets reliant l'étoile possible du couple avec les étoiles possibles des autres couples seront souvent différents des doublets détectés correspondants. Sur la figure 7 c'est l'appartement situé à l'extrême droite qui est erroné.

On traite chaque couple d'étoiles appariées successivement, que l'on appelle ici le «couple courant». Dans le cas de chacun des autres couples on mesure, dans un espace de caractérisation des doublets, l'écart entre le doublet détecté et le doublet possible séparants le couple considéré avec le couple courant. Soit $N_r$ le nombre de ces autres couples tels que l'écart est supérieur à une valeur de seuil pouvant dépendre des caractéristiques des doublets, par exemple la moyenne de leurs distances inter-étoiles. On rejette le couple courant si $N_r$ dépasse une limite dépendant éventuellement du nombre de couples appariés.

L'espace de caractérisation des doublets peut avoir comme axes la distance inter-étoiles, la somme des magnitures, la différence des magnitude (et non plus cette fois-ci la valeur absolue de cette différence). Quand l'espace est tel que l'ordre dans lequel on prend les deux étoiles est important, on commence pour le doublets détecté et pour le doublet possible par les étoiles d'un couple apparié.

De sorte à ce que les critères soient appliqués sur la bases des caractéristiques initiales de la liste de couples, ce procédé peut avantageusement être réalisé en deux passes : la première pour marquer les couples à supprimer et la seconde pour les supprimer effectivement dans les listes.

Le procédé de suppression de couples aberrants peut être appliqué avant ou après la suppression de listes sur la base

Vis-à-vis des performances du présent procédé complet, certaines étoiles peuvent poser problème dans le catalogue de départ peuvent systématiquement conduire à de mauvais résultats. Elles peuvent être supprimées du catalogue.

Après le choix éventuel par le système utilisateur de la reconnaissance d'une liste de couples d'étoiles appariées parmi celles qui lui sont fournies par le présent procédé, les couples d'étoiles appariées permettent de restituer l'attitude ou d'améliorer une telle estimation.

La position des étoiles détectées sur la matrice du senseur permet de remonter à la direction de ces étoiles dans le repère lié au senseur. Par ailleurs la direction des étoiles possibles correspondantes est connue dans le repère lié au catalogue. Si l'on dispose d'au moins deux couples appariés, on peut alors, par exemple grâce à un algorithme des moindres carrés, estimer l'orientation du repère senseur dans le repère du catalogue. Puisqu'on connaît l'orientation du repère senseur dans le repère satellite, on peut ensuite, par un changement de repère, remonter à l'attitude du satellite dans le repère du catalogue puis dans un repère par exemple lié à la Terre.

Dans ce qui précède, il a été largement question de listes d'objets (étoiles, doublets, etc...). Il s'agit de la convention choisie pour décrire le procédé. La notion de «liste» traduit l'existence de moyens permettant de matérialiser les liens entre une suite d'objets, permettant de retrouver ces objets pour leur faire subir des traitements ou pour les agencer entre eux. Cette suite est parfois ordonnée et parfois non ordonnée. Dans une application pratique du procédé, ces listes peuvent prendre des formes très différentes. En particulier, elles peuvent être virtuelles, c'est à dire uniquement matérialisées par des repères (marqueurs ou pointeurs) dans des ensembles plus grands (par exemple les catalogues d'étoiles et de doublets).

EXEMPLE D'APPLICATION

On utilise un senseur stellaire en mode cartographique, c'est à dire qu'il fournit la magnitude estimée des étoiles présentes dans son champ de vue ainsi que leur position estimée dans un repère sphérique lié à ce senseur.

Parmi les étoiles captées on garde comme étoiles détectées les dix étoiles ayant la plus forte magnitude.

On définit un espace de caractérisation des doublets tridimensionnel, dont les axes sont respectivement relatifs à la distance angulaire, la différence et la somme des magnitudes des deux étoiles d'un doublet. Un doublet est donc représenté dans cet espace par un point, qu'il s'agisse d'un doublet détecté (correspondant à une paire d'étoiles détectées) où d'un doublet possible (c'est à dire un doublet du catalogue).

Pour chacun des doublets détectés, on extrait du catalogue de doublets préalablement créé tout ceux qui, dans l'espace de caractérisation des doublets, se trouvent à l'intérieur d'un ellipsoïde centré sur le doublet détecté en question.

Par exemple, on considère l'ellipsoïde défini par les valeurs suivantes :

- 0,003 radian pour le demi-grand axe relatif à la distance angulaire
- 1,25 pour le demi-grand axe relatif à la somme des magnitudes
- 1,25 pour le demi-grand axe relatif à la différence des magnitudes.

Ces doublets extraits sont intégrés à la «liste des doublets possibles».

On réalise ensuite une opération de mise en classes et d'épuration basée sur le tableau I présenté plus haut.

Le critère d'épuration s'exprime donc de la façon suivante : on supprime une étoile possible si le nombre de doublets possibles dans lesquels elle est présente est strictement inférieur à une valeur fixée, dépendant dès le deuxième épisode du nombre d'étoiles dans la classe. Après la première mise en classes consécutive au premier épisode, on applique le procédé récursif de mise en classes-épuration décrit plus haut. Après une mise en classes initialisante on utilise à nouveau le tableau I.

Au cours de ces opérations, on supprime toute classe dont le nombre d'étoiles est inférieur ou égal à 3.

Pour toutes les classes successivement, on tente alors l'appariement pour chacune des étoiles en appliquant le procédé décrit plus haut. Dans chacune des classes, on arrête les opérations d'appariement quand le nombre d'étoiles appariées est supérieur à 5.

A la fin du traitement de chaque classe, on calcule le taux de confiance a posteriori défini de la façon suivante pour la classe numéro j :

$$\text{Confiance (j)} = (\text{th } (3,0 \ N_j))^{1,0} \ [T_j]^{2,0} \ (\theta_j)^{3,0}$$

$N_j$ est le nombre d'étoiles de la classe, $T_j$ le taux de connexion de la classe, et $\theta_j$ le taux d'étoiles appariées dans la classe (nombre d'étoiles appariées divisé par le nombre total).

On repère la classe dont le taux de confiance est le plus élevé. Si ce taux est inférieur à 0,03 ou si une incohérence a été relevée lors de l'appariement, le procédé ne restitue aucun couple d'étoiles appariées. Sinon, le procédé restitue la liste des couples d'étoiles appariées de la classe considérée.

L'invention n'est pas limitée aux exemples de réalisation qui ont été décrits.

**Revendications**

1. Procédé de reconnaissance d'étoiles, par confrontation d'étoiles dites « étoiles captées » définies par un senseur stellaire à partir de signaux reçus de la voûte céleste et d'étoiles d'un catalogue d'étoiles préétabli, pour un système de traitement informatique des informations provenant du senseur stellaire , dans lequel on met en oeuvre des moyens de calcul pour effectuer les opérations consistant à:

   - appliquer un critère de sélection pour sélectionner des étoiles parmi les étoiles captées, les étoiles ainsi sélectionnées étant dites « étoiles détectées »,
   - apparier les étoiles détectées en couples d'étoiles dits « doublets détectés »,
   - apparier les étoiles du catalogue en couples d'étoiles dits « doublets du catalogue »,
   - représenter les doublets du catalogue et les doublets détectés dans un espace mathématique dit de « caractérisation » de façon à permettre leur comparaison,
   - repérer dans cet espace les « doublets possibles », c'est-à-dire les doublets du catalogue qui, dans cet espace, sont dans un certains voisinage des doublets détectés,
   - créer des couples dits « couples appariés » constitués chacun d'une étoile d'un doublet possible dite « étoile possible » et d'une étoile détectée,
   - créer des listes de couples appariés et - fournir au système de traitement au moins une de ces listes,
   - **caractérisé en ce qu'**on utilise les moyens de calcul pour effectuer les opérations consistant à :

      - grouper en classes les étoiles des doublets possibles en considérant que deux étoiles appartiennent à une même classe si et seulement si ces deux étoiles sont une seule et même étoile ou s'il existe un chemin qui les relie, un chemin étant une suite de doublets possibles tels que toute paire de doublets consécutifs de cette suite ait au moins une étoile en commun, et constituer les listes classe par classe en sorte que les étoiles possibles d'une même liste soient les étoiles possibles des couples appariés d'une même classe.

2. Procédé selon la revendication 1, dans lequel les coordonnées d'un doublet dans l'espace de caractérisation comprend la valeur absolue de la différence des magnitudes des deux étoiles du doublet.

3. Procédé selon l'une des revendications 1 et 2 dans lequel pour constituer une classe, on part d'une étoile courante appartenant à un doublet possible et on intègre à la classe toutes les étoiles qui lui sont reliées par au moins un chemin, en réitérant par la suite ou récursivement la même opération à partir desdites étoiles reliées prises comme étoiles courantes, et en continuant de la sorte jusqu'à ce que tous les doublets et étoiles possibles atteints de proche en proche aient été traités.

4. Procédé selon l'une des revendications 1 à 3, dans lequel on soumet les étoiles des doublets possibles à une épuration conduisant à supprimer certaines d'entre elles.

5. Procédé selon la revendication 4, dans lequel on effectue l'épuration grâce à une succession d'épisodes définies par un tableau d'épisodes, chaque épisode étant constitué d'un ensemble de passes pouvant se réduire à une passe, chaque passe consistant à conserver ou supprimer, dans le groupe d'étoiles sur lequel porte l'épuration, celles qui répondent à un critère d'épuration identique pour tout l'épisode.

6. Procédé selon la revendication 5, dans lequel après certains épisodes et/ou avant le premier épisode on réalise une mise en classes du groupe d'étoiles traitées

7. Procédé selon la revendication 6, dans lequel pour les calculs du critère d'épuration appliqué aux étoiles issues d'une classe on utilise les propriétés de cette classe, telles que son nombre d'étoiles ou son nombre de doublets.

8. Procédé selon l'une des revendications 6 et 7, dans lequel au cours d'une passe on supprime les étoiles dont le nombre de liaisons avec les autres étoiles est inférieur à un seuil dépendant du nombre d'étoiles dans la dernière classe à laquelle a appartenu l'étoile après une mise en classes.

9. Procédé selon l'une des revendications 6 à 8, dans lequel si une mise en classes réalisée après un épisode a conduit à la création de plus d'une classe, on applique aux classes résultantes le premier des épisodes d'un nouveau tableau d'épisodes, ce tableau étant identique au précédent ou déterminé par le nombre de mises en classes déjà subies par les étoiles considérées.

10. Procédé selon l'une des revendications 6 à 9, dans lequel on applique pour toutes les classes issues de l'épisode précédent la série suivante d'épisodes non entrecoupée de mises en classes dans le tableau courant d'épisodes, on rassemble ensuite les étoiles restantes dans toutes les classes et l'on effectue une nouvelle mise en classes.

11. Procédé selon l'une des revendications 6 à 9, dans lequel on applique pour chacune des classes issues de l'épisode précédent la série suivante d'épisodes non entrecoupée de mises en classes dans le tableau courant d'épisodes, on effectue une mise en classes indépendamment pour chacun des groupes d'étoiles issus des classes précédentes et l'on rassemble ces classes.

12. Procédé selon l'une des revendications 6 à 9, dans lequel on traite récursivement les classes, c'est à dire qu'après chaque mise en classes on traite successivement chaque classe jusqu'à produire les classes définitives avant de passer à la classe suivante.

13. Procédé selon l'une des revendications 1 à 12, dans lequel on supprime les classes dont le nombre d'étoiles est inférieur à un seuil prédéterminé.

14. Procédé selon l'une des revendications 1 à 13, dans lequel pour réaliser l'appariement, on traite successivement les étoiles du catalogue appartenant à la classe considérée et pour l'étoile $e_p$ courante on créé la liste LDD des doublets détectés qui sont à l'origine des doublets possibles contenant cette étoile et on choisit l'étoile détectée $\hat{e}_d$ qui est la plus souvent rencontrée parmi cette liste de doublets détectés pour l'apparier à l'étoile $e_p$.

15. Procédé selon la revendication 14, dans lequel on ne réalise pas l'appariement si la différence entre le nombre de rencontres dans le cas de la seconde étoile la plus rencontrée et dans celui de $\hat{e}_d$ est inférieur à une valeur limite dépendant de caractéristiques de la classe, telles que son nombre d'étoiles.

16. Procédé selon l'une des revendications 1 à 15 dans lequel on calcule une valeur de confiance a priori associée à chaque classe.

17. Procédé selon l'une des revendications 1 à 16 dans lequel on calcule une valeur de confiance a posteriori associée à chaque classe sur laquelle on base la sélection des classes dont on restitue les couples d'étoiles appariées.

18. Procédé selon l'une des revendications 16 et 17, dans lequel la valeur de confiance a priori et/ou la valeur de confiance a posteriori comprend un ou plusieurs des termes du groupe constitué par les termes basés sur le nombre d'étoiles dans la classe, la tangente hyperbolique du nombre d'étoiles multiplié par une constante $\beta$, le tout élevé à une certaine puissance $\delta$, et les critères basés sur le taux de connexion de la classe élevé à une puissance $\alpha$.

19. Procédé selon la revendication 18, dans lequel les valeurs de confiance a priori ont pour terme le produits de tout ou partie des facteurs décrits dans la revendication 18.

20. Procédé selon l'une des revendications 1 à 19, dans lequel on élimine avant l'appariement (respectivement après) une classe dont la valeur de confiance a priori (respectivement a posteriori) est inférieure à une limite.

21. Procédé selon l'une des revendications 17 et 18, dans lequel la valeur de confiance a posteriori est basée sur le taux d'étoiles appariées élevé à une certaine puissance $\gamma$ et/ou sur un terme fonction des incohérences qui ont été rencontrées lors de l'appariement.

22. Procédé selon les revendications 18 et 21, dans lequel la valeur de confiance a posteriori a pour terme le produit de tout ou partie des facteurs décrits dans les revendications 18 et 21.

23. Procédé selon l'une des revendications 1 à 22, dans lequel on ne restitue pas audit système de traitement utilisateur de la reconnaissance la liste des couples d'étoiles appariées correspondant à une classe pour laquelle a été détectée au moins une incohérence, ou on la restitue accompagnée d'une indication d'incohérence.

24. Procédé selon les revendications 1 à 22, dans lequel on traite les classes dans l'ordre de la valeur de confiance a priori décroissante, on arrête le traitement des classes dès que la valeur de confiance a posteriori d'un nombre prédéfini d'entre elles dépasse une valeur de seuil, et l'on fournit au système utilisateur de la reconnaissance la ou les listes de couples d'étoiles appariées correspondantes.

25. Procédé selon les revendications 1 à 22, dans lequel on transmet au dit système de traitement utilisateur de la reconnaissance un nombre prédéfini de listes de couples d'étoiles appariées correspondant aux classes dont la valeur de confiance est la plus élevé dans l'ordre décroissant de cette valeur de confiance et/ou accompagnées de cette valeur.

26. Procédé selon les revendications 1 à 25, dans lequel on supprime d'une liste de couples d'étoiles appariés un couple tel que, pour un nombre d'autres couples qui dépasse une valeur limite pouvant dépendre du nombre de couples, l'écart entre le doublet détecté et le doublet possible séparant ledit couple et l'autre couple est, dans un espace de caractérisation des doublets, supérieurs à une valeur de seuil.

27. Application d'un procédé selon l'une des revendications 1 à 26 à la détermination de l'attitude du senseur ou du véhicule emportant le senseur.

**Claims**

1. A method for identifying stars, by collation of stars, so-called "sensed stars" defined by a star sensor from signals received from the sky and of stars from a pre-established star catalog, intended for a computer system for processing information from the star sensor, wherein computation means are applied for carrying out operations consisting of:

   - applying a selection criterion in order to select stars from the sensed stars, the thereby selected stars being so-called "detected stars",
   - pairing the detected stars into pairs of stars so-called "detected doublets",
   - pairing the stars from the catalog into pairs of stars so-called "catalog doublets",
   - representing the doublets from the catalog and the detected doublets in a mathematical space, a so-called "characterization" space, so as to allow their comparison,
   - locating in this space the "possible doublets", i.e. the doublets of the catalog which, in this space, are in a certain vicinity of the detected doublets,
   - creating pairs, so-called "matched pairs", each consisting of a star of a possible doublet, a so-called "possible star" and of a detected star,
   - creating lists of matched pairs and,
   - providing the processing system with at least one of these lists,

- **characterized in that** computation means are used for carrying out operations consisting of:
- grouping the stars of the possible doublets into classes, by considering that two stars belong to a same class if and only if both of these stars are the one and same star or if there exists a path which connects them, a path being a sequence of possible doublets such that any pair of consecutive doublets of this sequence has at least one star in common, and
- drawing up the lists class by class so that the possible stars of a same list are the possible stars of matched pairs of a same class.

2. The method according to claim 1, wherein the coordinates of a doublet in the characterization space comprises the absolute value of the difference in magnitudes of both stars of the doublet.

3. The method according to any of claims 1 and 2, wherein in order to form a class, one starts with a current star belonging to a possible doublet and all the stars which are connected to it through at least one path, are integrated to the class, by subsequently or recursively repeating the same operation, from said connected stars taken as current stars, and by continuing in this way until all the possible doublets and stars reached step by step have been processed.

4. The method according to any of claims 1 to 3, wherein the stars of the possible doublets are subject to a purge leading to the suppression of some of them.

5. The method according to claim 4, wherein a purge is carried out by a succession of episodes defined in an episode table, each episode being formed by a set of passes which may be reduced to one pass, each pass consisting of retaining or suppressing in the group of stars on which the purge is performed, those which meet an identical purge criterion for the whole episode.

6. The method according to claim 5, wherein after certain episodes and/or after the first episode, a classification of the group of processed stars into classes is carried out.

7. The method according to claim 6, wherein for the computations of the purge criterion applied to the stars from a class, the properties of this class, such as its number of stars or its number of doublets, are used.

8. The method according to any of claims 6 and 7, wherein during one pass, the stars for which the number of connections with the other stars is less than a threshold depending on the number of stars in the last class to which belonged the star after classification, are suppressed.

9. The method according to any of claims 6 to 8, wherein if a classification carried out after an episode has lead to the creation of more than one class, the first of the episodes of a new episode table is applied to the resulting classes, this table being identical to the preceding one or determined by the number of classifications already undergone by the relevant stars.

10. The method according to any of claims 6 to 9, wherein for all the classes from the preceding episode, the following series of episodes not interrupted by classifications in the current episode table is applied, the remaining stars in all the classes are then collected and a new classification into classes is carried out.

11. The method according to any of claims 6 to 9, wherein for each of the classes from the preceding episode, the following series of episodes not interrupted by classifications into the current episode table is applied, a classification into classes is carried out independently for each of the groups of stars from the preceding classes and these classes are collected.

12. The method according to any of claims 6 to 9, wherein the classes are processed recursively, i.e. after each classification, each class is successively processed until definitive classes are produced before passing to the next class.

13. The method according to any of claims 1 to 12, wherein the classes for which the number of stars is less than a predetermined threshold are suppressed.

14. The method according to any of claims 1 to 13, wherein in order to achieve pairing, the stars of the catalog belonging to the relevant class are successively processed and for the current star $e_p$ the list LDD of the detected doublets which are at the origin of the possible doublets containing this star is created and the detected star $\hat{e}_d$ which is the most often encountered in this list of detected doublets, is selected in order to pair it with the star $e_p$.

**15.** The method according to claim 14, wherein pairing is not achieved if the difference between the number of encounters in the case of the second most encountered star and in that of $\hat{e}_d$ is less than a limiting value depending on characteristics of the class, such as its number of stars.

**16.** The method according to any of claims 1 to 15, wherein a confidence value a priori associated with each class is computed.

**17.** The method according to any of claims 1 to 16, wherein a confidence value a posteriori is computed, associated with each class on which the selection of the classes is based for which the matched pairs of stars are returned.

**18.** The method according to any of claims 16 and 17, wherein the a priori confidence value and/or the a posteriori confidence value comprises one or more of the terms of the group formed by the terms based on the number of stars in the class, the hyperbolic tangent of the number of stars multiplied by a constant $\beta$, the whole raised to a certain power $\delta$, and the criteria based on the connection rate of the class raised to a power $\alpha$.

**19.** The method according to claim 18, wherein the a priori confidence values have as term the product of all or part of the factors described in claim 18.

**20.** The method according to any of claims 1 to 19, wherein a class for which the a priori (respectively a posteriori) confidence value is less than a limit, is removed before (respectively after) pairing.

**21.** The method according to any of claims 17 and 18, wherein the a posteriori confidence value is based on the rate of paired stars raised to a certain power y and/or on a term function of the inconsistencies which have been encountered during pairing.

**22.** The method according to claims 18 and 21, wherein the a posteriori confidence value has as a term the product of all or part of the factors described in claims 18 and 21.

**23.** The method according to any of claims 1 to 22, wherein the list of pairs of paired stars corresponding to a class for which at least one inconsistency was detected, is returned to said processing system using the identification, or else it is returned accompanied with an inconsistency indication.

**24.** The method according to claims 1 to 22, wherein the classes are processed in the order of the decreasing a priori confidence value, the processing of the classes is stopped as soon as the a posteriori confidence value of a predefined number of them exceeds a threshold value, and the system using the identification, is provided with the list(s) of the corresponding matching pairs of stars.

**25.** The method according to claims 1 to 22, wherein a predefined number of lists of matched pairs of stars corresponding to the classes for which the confidence value is the highest in the decreasing order of this confidence value and/or accompanied by this value, is transmitted to said processing system using the identification.

**26.** The method according to claims 1 to 25, wherein a pair is suppressed from a list of matching pairs of stars such that, for a number of other pairs, which exceeds a limiting value which may depend on the number of pairs, the distance between the detected doublet and the possible doublet separating said pair and the other pair in a characterization space of the doublets, is larger than a threshold value.

**27.** The application of a method according to any of claims 1 to 26 for determining the attitude of the sensor or of the vehicle carrying the sensor.

**Patentansprüche**

**1.** Verfahren zum Erkennen von Sternen durch Vergleichen von Sternen, die als "erfasste Sterne" bezeichnet werden und die basierend auf vom Himmelsgewölbe empfangenen Signalen durch einen Stellarsensor gegeben sind, mit Sternen eines vorab gegebenen Sternenkatalogs, für ein System zur Datenverarbeitung von Informationen, die vom Stellarsensor kommen, in dem Berechnungsmittel eingesetzt werden, um Operationen auszuführen, die aus folgendem bestehen:

- Anwenden eines Auswahlkriteriums zur Auswahl von Sternen aus den erfassten Sternen, wobei die so ausgewählten Sterne als "detektierte Sterne" bezeichnet werden,
- Paaren der detektierten Sterne zu Sternenpaaren, die als "detektierte Dubletten" bezeichnet werden,
- Paaren der Sterne des Katalogs zu Sternenpaaren, die als "Katalog-Dubletten" bezeichnet werden,
- Darstellen der Katalog-Dubletten und der detektierten Dubletten in einem mathematischen Raum, der als "Merkmals"-Raum bezeichnet wird, derart, dass deren Vergleich ermöglicht wird,
- Auffinden in diesem Raum der "möglichen Dubletten", das heißt der Katalog-Dubletten, die sich in diesem Raum in einer bestimmten Nachbarschaft zu den detektierten Dubletten befinden,
- Erzeugen von Paaren, die als "gepaarte Paare" bezeichnet werden und von denen jedes aus einem Stern einer möglichen Dublette, der als "möglicher Stern" bezeichnet wird, und einem detektierten Stern besteht,
- Erzeugen von Listen der gepaarten Paare, und
- Übergeben wenigstens einer dieser Listen an das Verarbeitungssystem,

**dadurch gekennzeichnet, dass** die Berechnungsmittel verwendet werden, um folgende Operationen auszuführen:

- Gruppieren der Sterne der möglichen Dubletten in Klassen unter der Vorgabe, dass zwei Sterne derselben Klasse dann und nur dann angehören, wenn diese beiden Sterne ein und derselbe Stern sind oder wenn es einen Pfad gibt, der sie verbindet, wobei ein Pfad eine Folge von möglichen Dubletten ist, derart, dass jedes aufeinanderfolgende Dublettenpaar dieser Folge wenigstens einen Stern gemeinsam hat, und
- Bilden der Listen Klasse für Klasse, derart, dass die möglichen Sterne einer bestimmten Liste die möglichen Sterne der gepaarten Paare einer bestimmten Klasse sind.

2. Verfahren nach Anspruch 1, bei dem die Koordinaten einer Dublette im Merkmalsraum einen Absolutwert der Differenz der Magnituden der beiden Sterne der Dublette umfassen.

3. Verfahren nach einem der Ansprüche 1 und 2, bei dem zum Bilden einer Klasse mit einem laufenden Stern begonnen wird, der einer möglichen Dublette angehört, und in die Klasse alle Sterne einbezogen werden, die mit ihm über wenigstens einen Pfad verbunden sind, wobei anschließend oder rekursiv dieselbe Operation ausgehend von den verbundenen Sternen wiederholt wird, die als laufende Sterne eingesetzt werden, und auf diese Weise fortgefahren wird, bis nach und nach alle erreichten möglichen Sterne und Dubletten behandelt worden sind.

4. Verfahren nach einem der Ansprüche 1 bis 3, bei dem die Sterne der möglichen Dubletten einer Aussortierung unterzogen werden, die dazu führt, bestimmte von ihnen zu entfernen.

5. Verfahren nach Anspruch 4, bei dem das Aussortieren mittels einer Folge von Episoden ausgeführt wird, die durch eine Episodentabelle definiert ist, wobei jede Episode durch ein Satz von Durchgängen gebildet wird, der sich auf einen Durchgang beschränken kann, wobei jeder Durchgang darin besteht, in der Gruppe von Sternen, auf die das Aussortieren sich bezieht, diejenigen beizubehalten oder zu entfernen, die einem Aussortierungskriterium genügen, das für die ganze Episode identisch ist.

6. Verfahren nach Anspruch 5, bei dem nach bestimmten Episoden und/oder vor der ersten Episode eine Klasseneinteilung der behandelten Gruppe von Sternen ausgeführt wird.

7. Verfahren nach Anspruch 6, bei dem für die Berechnungen des Aussortierungskriteriums, das auf die aus einer Klasse kommenden Sterne angewendet wird, die Eigenschaften dieser Klasse verwendet werden, wie etwa ihre Anzahl an Sternen oder ihre Anzahl an Dubletten.

8. Verfahren nach einem der Ansprüche 6 und 7, bei dem im Verlauf eines Durchgangs die Sterne entfernt werden, deren Anzahl an Verbindungen mit den anderen Sternen kleiner ist als ein Schwellwert, der von der Anzahl Sterne in der letzten Klasse abhängt, der der Stern nach einer Klasseneinteilung angehört hat.

9. Verfahren nach einem der Ansprüche 6 bis 8, bei dem, falls eine nach einer Episode ausgeführte Klasseneinteilung zur Erzeugung vom mehr als einer Klasse geführt hat, auf die sich ergebenden Klassen die erste Episode einer neuen Episodentabelle angewendet wird, wobei diese Tabelle identisch zur vorhergehenden ist oder durch die Anzahl an Klasseneinteilungen bestimmt ist, denen die betrachteten Sterne bereits unterzogen wurden.

10. Verfahren nach einem der Ansprüche 6 bis 9, bei dem auf alle aus der vorhergehenden Episode kommenden Klassen die nachfolgende Serie von Episoden in der laufenden Episodentabelle, die nicht durch Klasseneinteilungen unterbrochen ist, angewendet wird, wobei anschließend die verbleibenden Sterne aus allen Klassen zusammengefasst werden und eine neue Klasseneinteilung ausgeführt wird.

11. Verfahren nach einem der Ansprüche 6 bis 9, bei dem auf jede der aus der vorhergehenden Episode kommenden Klassen die nachfolgende Serie von Episoden in der laufenden Episodentabelle, die nicht durch Klasseneinteilungen unterbrochen ist, angewendet wird und für jede der aus den vorhergehenden Klassen stammenden Sternengruppen eine unabhängige Klasseneinteilung ausgeführt wird und diese Klassen zusammengefasst werden.

12. Verfahren nach einem der Ansprüche 6 bis 9, bei dem die Klassen rekursiv verarbeitet werden, was heißt, dass nach jeder Klasseneinteilung aufeinanderfolgend jede Klasse verarbeitet wird, bis die endgültigen Klassen erzeugt sind, bevor zur nächsten Klasse weitergegangen wird.

13. Verfahren nach einem der Ansprüche 1 bis 12, bei dem die Klassen entfernt werden, deren Anzahl an Sternen kleiner als ein vorgegebener Schwellwert ist.

14. Verfahren nach einem der Ansprüche 1 bis 13, bei dem zur Ausführung der Paarbildung die zur betrachteten Klasse gehörenden Sterne des Katalogs aufeinanderfolgend verarbeitet werden und für den laufenden Stern $e_p$ die Liste LDD der detektierten Dubletten erzeugt wird, auf denen die möglichen Dubletten basieren, die diesen Stern enthalten, und es wird der detektierte Stern $\hat{e}_d$ ausgewählt, der in dieser Liste der detektierten Dubletten am häufigsten auftritt, um ihn mit dem Stern $e_p$ zu paaren.

15. Verfahren nach Anspruch 14, bei dem die Paarbildung nicht vorgenommen wird, wenn die Differenz zwischen der Anzahl der Auftritte im Fall des am zweithäufigsten auftretenden Sterns und in demjenigen von $\hat{e}_d$ kleiner als ein Grenzwert ist, der von den Eigenschaften der Klasse abhängt, wie etwa von ihrer Anzahl an Sternen.

16. Verfahren nach einem der Ansprüche 1 bis 15, bei dem ein jeder Klasse zugeordneter A-priori-Vertrauenswert berechnet wird.

17. Verfahren nach einem der Ansprüche 1 bis 16, bei dem ein jeder Klasse zugeordneter A-posteriori-Vertrauenswert berechnet wird, auf dem die Auswahl der Klassen basiert, deren gepaarte Sternenpaare bestätigt werden.

18. Verfahren nach einem der Ansprüche 16 und 17, bei dem der A-priori-Vertrauenswert und/oder der A-posteriori-Vertrauenswert einen oder mehrere der Ausdrücke der Gruppe umfasst, die durch die Terme gebildet werden, die auf der Anzahl der Sterne in der Klasse, dem Tangens Hyperbolicus der Anzahl der Sterne multipliziert mit einer Konstante $\beta$ und das Ganze in eine bestimmte Potenz $\delta$ erhoben basieren und den Kriterien, die auf der Verbindungsquote der Klasse in eine Potenz $\alpha$ erhoben basieren.

19. Verfahren nach Anspruch 18, bei dem die A-priori-Vertrauenswerte als Ausdruck das Produkt aller oder eines Teils der Faktoren haben, die in Anspruch 18 beschrieben sind.

20. Verfahren nach einem der Ansprüche 1 bis 19, bei dem vor der Paarbildung (bzw. danach) eine Klasse eliminiert wird, deren A-priori (bzw. A-posteriori) Vertrauenswert unter einer Grenze liegt.

21. Verfahren nach einem der Ansprüche 17 und 18, bei dem der A-posteriori-Vertrauenswert auf folgendem basiert: der Quote der gepaarten Sterne erhoben in eine bestimmte Potenz y und/oder einem Ausdruck, der von den Inkohärenzen abhängt, die bei der Paarbildung aufgetreten sind.

22. Verfahren nach einem der Ansprüche 18 und 21, bei dem der A-posteriori-Vertrauenswert als Ausdruck das Produkt aller oder eines Teils der in den Ansprüchen 18 und 21 beschriebenen Faktoren hat.

23. Verfahren nach einem der Ansprüche 1 bis 22, bei dem an das Anwender-Verarbeitungssystem zur Erkennung die Liste der gepaarten Sternenpaare, die einer Klasse entsprechen, für die wenigstens eine Inkohärenz festgestellt wurde, nicht übergeben wird oder sie begleitet von einem Inkohärenzhinweis übergeben wird.

24. Verfahren nach einem der Ansprüche 1 bis 22, bei dem die Klassen in der Reihenfolge absteigender A-priori-Vertrauenswerte verarbeitet werden, wobei die Verarbeitung der Klassen angehalten wird, sobald der A-posteriori-Vertrauenswert einer vorgegebenen Anzahl unter ihnen einen Schwellwert überschreitet, und es werden an das Anwendersystem zur Erkennung die eine oder die mehreren entsprechenden Listen gepaarter Sternenpaare übergeben.

**25.** Verfahren nach einem der Ansprüche 1 bis 22, bei dem an das Anwender-Verarbeitungssystem zur Erkennung eine vorgegebene Anzahl von Listen mit gepaarten Sternenpaaren, die den Klassen entsprechen, deren Vertrauenswert am höchsten ist, in absteigender Reihenfolge dieses Vertrauenswertes und/oder begeleitet von diesem Wert übergeben wird.

**26.** Verfahren nach einem der Ansprüche 1 bis 25, bei dem aus einer Liste mit gepaarten Sternenpaaren ein Paar derart entfernt wird, dass, für eine Anzahl weiterer Paare, die einen Grenzwert übersteigt, der von der Anzahl Paare abhängen kann, der Abstand zwischen der detektierten Dublette und der möglichen Dublette, die dieses Paar und das weitere Paar trennen, in einem Merkmalsraum der Dubletten größer als ein Schwellwert ist.

**27.** Anwendung eines Verfahrens gemäß einem der Ansprüche 1 bis 26 zur Bestimmung der Lage des Sensors oder des Fahrzeugs, das den Sensor trägt.

## FIG_1

doublets possibles · doublet du catalogue non retenu

Différence des magnitudes

Somme des magnitudes

Voisinage

Doublet détecté

Distance

## FIG_2

Doublets possibles dans le catalogue

## FIG_3

Liste des doublets possibles

Liste des doublets détectés à l'origine des doublets possibles

Les deux étoiles détectées à l'origine du doublet détecté

FIG_4

Parcours direct
ou indirect de l'ensemble
des étoiles possibles

Si l'étoile détectée courante n'est pas encore en classe,
création d'une classe contenant l'étoile de départ

Fonction F

Boucle sur tous les doublets possibles
contenant cette étoile

L'autre
étoile du
doublet est déjà dans
la liste de la classe
en cours de
constitution

Non

La rajouter à la liste
des étoiles de la classe
Lui appliquer cette
même fonction F

Oui

S'il n'y est déjà, rajouter ce doublet aux listes
des doublets possibles associés aux deux étoiles

FIG_5

Fonction G

Boucle sur les doublets possibles de la classe contenant l'étoile e (appariée à ê)

Le doublet est marqué — Oui

Marquage du doublet possible

Boucle sur les doublets détectés à l'origine du doublet possible

Le doublet détecté contient ê — Non

L'étoile ê' du doublet détecté qui n'est pas ê est déja appariée — Oui / Non

ê' est appariée à e' — Oui / Non

Appariement éventuellement incohérent Mais on continue les tentatives

On apparie ê' et e'
On applique cette fonction G à e'

FIG_6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.W.H VAN BEZOOIJEN ; TSUKUBA.** Autonomous Star Tracker Development. *Automatic Control In Aerospace IFAC Symposium,* 07 Septembre 1992